(19) **Europäisches Patentamt**
**European Patent Office**
**Office européen des brevets**

(11) **EP 4 775 175 A1**

(12) **EUROPEAN PATENT APPLICATION**
published in accordance with Art. 153(4) EPC

(43) Date of publication:
**15.07.2026 Bulletin 2026/29**

(51) International Patent Classification (IPC):
**A61C 17/26** (2006.01)  **A61C 17/22** (2006.01)
**G01L 5/00** (2006.01)

(21) Application number: **24861766.4**

(52) Cooperative Patent Classification (CPC):
**A61C 17/22; A61C 17/26; G01L 5/00**

(22) Date of filing: **09.08.2024**

(86) International application number:
**PCT/CN2024/110928**

(87) International publication number:
**WO 2025/050922 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.09.2023 CN 202311136084**

(71) Applicant: **Shanghai Shift Electrics Co., Ltd.
Shanghai 201506 (CN)**

(72) Inventor: **DAI, Xiaoguo
Shanghai 201506 (CN)**

(74) Representative: **WSL Patentanwälte
Partnerschaft mbB
Kaiser-Friedrich-Ring 98
65185 Wiesbaden (DE)**

(54) **PERSONAL CARE APPLIANCE**

(57) The present disclosure discloses a personal care appliance. The personal care appliance includes: a handle housing, and a rotating assembly including a force-receiving element, the rotating assembly being rotatable relative to the handle housing when an external force is applied to the force-receiving element; and a force detection device configured to detect a force on the force-receiving element, where the force detection device includes an inductance unit and a magnet, the magnet being arranged relative to a magnetic core of the inductance unit to generate a magnetic flux passing through the magnetic core of the inductance unit; and the magnet is displaced relative to the inductance unit as the rotating assembly rotates, and the inductance unit outputs a signal indicative of an angle of rotation of the rotating assembly. In the present disclosure, the magnetic core of the inductance unit enters a magnetic saturation state under the action of a permanent magnet or an electromagnet, so that the inductance of the inductance unit decreases more rapidly, and the force detection device will exhibit a larger variation in measured values under the same external force, thereby enabling more accurate and clear indication of displacement changes and reflection of the magnitude of the external force.

FIG. 2

## Description

## Technical Field

The present disclosure relates to the technical field of personal oral care devices, and in particular to a personal care appliance with a force detection device.

## Background Art

In the current electric toothbrush market, reminding users to brush with appropriate pressure to protect their gums has become an increasingly demand. Currently, various solutions exist in the market to measure the external force applied to a brush head of the electric toothbrush. However, due to the extremely limited deflection range of the brush head of the electric toothbrush, the detection accuracy of the external force applied to the brush head is poor in the existing electric toothbrushes, with relatively large detection errors, and only a force threshold can be detected.

In particular, for some electric toothbrushes equipped with a resonant assembly, applying the external force to the brush head results in a smaller deflection range of an inner core component of the electric toothbrush that constitutes a rotating assembly compared to electric toothbrushes equipped with a direct-current motor. Therefore, for such electric toothbrushes, there is a more urgent need to improve the detection accuracy of the external force, so as to provide users with accurate indication of operating force.

## Summary

To overcome the deficiencies in the prior art, the present disclosure provides a personal care appliance, including: a handle housing; a rotating assembly, including a force-receiving element extending outwardly relative to the handle housing, the rotating assembly being rotatable relative to the handle housing when an external force is applied to the force-receiving element; and a force detection device configured to detect a force on the force-receiving element, where the force detection device includes an inductance unit and a magnet, where the inductance unit includes a fixed magnetic core and an electrical conductor surrounding the fixed magnetic core, and the magnet is arranged relative to the magnetic core of the inductance unit to generate a magnetic flux passing through the magnetic core of the inductance unit; and the magnet is displaced relative to the inductance unit as the rotating assembly rotates, and the inductance unit outputs a signal indicative of an angle of rotation of the rotating assembly, thereby further identifying the magnitude of the external force applied to the force-receiving element.

According to an aspect of the present disclosure, the fixed magnetic core of the inductance unit is in an unsaturated state when the magnet is furthest away from the inductance unit, and the magnetic flux generated by the magnet and passing through the magnetic core causes the fixed magnetic core of the inductance unit to enter a magnetic saturation state when the magnet rotates with the rotating assembly to approach the inductance unit.

According to a further aspect of the present disclosure, the fixed magnetic core of the inductance unit has entered a magnetic saturation state when the magnet is furthest from the fixed magnetic core of the inductance unit; a change in the magnetic flux generated by the magnet and passing through the magnetic core intensifies the magnetic saturation state of the fixed magnetic core of the inductance unit during a process where the magnet rotates with the rotating assembly to approach the fixed magnetic core of the inductance unit; and a change in the magnetic flux generated by the magnet and passing through the magnetic core alleviates the magnetic saturation state of the fixed magnetic core of the inductance unit during a process where the magnet rotates with the rotating assembly to move away from the fixed magnetic core of the inductance unit.

According to a further aspect of the present disclosure, the fixed magnetic core of the inductance unit is approximately at a moderate saturation critical point when the magnet is furthest from the fixed magnetic core of the inductance unit, and the magnet causes the fixed magnetic core of the inductance unit to be approximately at a deep saturation critical point when the magnet is closest to the fixed magnetic core of the inductance unit; a change in the magnetic flux generated by the magnet and passing through the magnetic core intensifies the magnetic saturation state of the fixed magnetic core of the inductance unit during a process where the magnet rotates with the rotating assembly to approach the fixed magnetic core of the inductance unit; and a change in the magnetic flux generated by the magnet and passing through the magnetic core alleviates the magnetic saturation state of the fixed magnetic core of the inductance unit during a process where the magnet rotates with the rotating assembly to move away from the fixed magnetic core of the inductance unit. In the present disclosure, the magnetic core of the inductance unit enters a magnetic saturation state under the action of a permanent magnet or an electromagnet, so that the inductance of the inductance unit decreases more rapidly, and the force detection device can obtain a larger variation in measured values under the same amount of displacement, thereby enabling more accurate and clear indication of displacement changes and reflection of the magnitude of the external force.

According to a further aspect of the present disclosure, the inductance unit is fixed on a control circuit board arranged stationary relative to the handle housing, and the magnet is disposed on the rotating assembly; and the personal care appliance further includes an elastic element for restoring the rotating assembly relative to the handle housing.

According to a further aspect of the present disclosure, the rotating assembly further includes a direct-current motor, and the force-receiving element is a driving shaft driven by the direct-current motor or a brush head; and the magnet is disposed on a support component mounted to an end of the motor away from the driving shaft, and the elastic element is disposed on the support component.

According to a further aspect of the present disclosure, the magnet includes a first magnet and a second magnet, and the inductance unit includes a first inductance unit and a second inductance unit, where when the first magnet rotates with the rotating assembly and is closest to the first inductance unit, magnetic flux generated by the first magnet and passing through the magnetic core causes the magnetic core of the inductance unit to enter a magnetic saturation state; and when the second magnet rotates with the rotating assembly and is closest to the second inductance unit, magnetic flux generated by the second magnet and passing through the magnetic core causes the magnetic core of the second inductance unit to enter a magnetic saturation state.

According to a further aspect of the present disclosure, the personal care appliance includes a resonant assembly and a coil assembly fixedly mounted relative to the handle housing, the resonant assembly including a permanent magnet, a permanent magnet bracket for mounting the permanent magnet, and a driving shaft serving as or connected to the force-receiving element, and the personal care appliance further includes a first bearing and a second bearing, where the first bearing is closer to the driving shaft relative to the second bearing, and the first bearing and the second bearing are arranged to allow reciprocal rotation of the resonant assembly relative to the handle housing about an axis of the driving shaft when magnetic field lines of the permanent magnet cut through current carried by the coil assembly; and the rotating assembly includes the first bearing and the second bearing, the rotating assembly is rotatable about a pivot axis when the external force to be measured is applied to the force-receiving element, the pivot axis passing through one of the first bearing and the second bearing and being perpendicular to a rotation axis of the driving shaft, and the other of the first bearing and the second bearing is movably arranged relative to the handle housing. In general, the direction of the external force to be measured coincides with a longitudinal direction of a cleaning element on the force-receiving element. For a toothbrush head, the direction of the external force to be measured coincides with a direction of extension (longitudinal direction) of bristles.

According to a further aspect of the present disclosure, there is also included a lever configured to amplify the amount of displacement of the force detection device, the lever including a short arm and a long arm, where the long arm is in contact with the one of the first bearing and the second bearing, with the elastic element for restoring the rotating assembly relative to the handle housing being disposed therebetween, and the short arm is in contact with the other of the first bearing and the second bearing. A lever rotation axis of the lever is parallel to the pivot axis of the rotating assembly. For the toothbrush head, the lever and the pivot axis of the rotating assembly are substantially perpendicular to the direction of extension of the bristles on the brush head.

According to a further aspect of the present disclosure, the pivot axis of the rotating assembly passes through the first bearing, and the second bearing is movably arranged relative to the handle housing. The personal care appliance further includes a lever configured to amplify the amount of displacement of the force detection device, the lever including a short arm and a long arm, where the short arm is in contact with the second bearing, and the long arm extends toward a side away from the driving shaft; a distal end of the long arm is provided with the magnet of the force detection device, and the inductance unit is disposed on a circuit board which is stationary relative to the handle housing; and the magnet is opposite the inductance unit with the circuit board interposed therebetween.

According to a further aspect of the present disclosure, the magnet includes a permanent magnet and an electromagnet.

In addition, the present disclosure further provides a personal care appliance, including: a handle housing; a rotating assembly, including a force-receiving element extending outwardly relative to the handle housing, the rotating assembly being rotatable relative to the handle housing when an external force is applied to the force-receiving element; and a force detection device configured to detect a force on the force-receiving element, where the force detection device includes a first inductance unit, a second inductance unit, and a mutual inductance coupling member, where the first inductance unit and the second inductance unit each include a magnetic core and an electrical conductor surrounding the magnetic core, and the mutual inductance coupling member moves relative to the first inductance unit and the second inductance unit within an external magnetic flux linkage between the first inductance unit and the second inductance unit to cause a change in a mutual inductance between the first inductance unit and the second inductance unit.

By "mutual inductance coupling member" herein is meant a component which moves within the external magnetic flux linkage between a plurality of inductance units to change the coupling coefficient between the plurality of detection inductance units. The movement of the mutual inductance coupling member relative to the external magnetic flux linkage between the inductance units causes a change in the mutual inductance between the plurality of inductance units. The use of the change in the mutual inductance enables more accurate and clear indication of displacement changes and reflection of the magnitude of the external force compared to existing means of force measurement using the change in self-inductance.

According to another aspect of the present disclosure, the first inductance unit and the second inductance unit are disposed on a control circuit board which is arranged stationary relative to the handle housing; the mutual inductance coupling member is disposed on the rotating assembly; and the personal care appliance further includes an elastic element for restoring the rotating assembly relative to the handle housing.

According to another aspect of the present disclosure, the mutual inductance coupling member includes a magnetic conductor formed of a material having a relative permeability of at least 10, and the magnetic conductor is arranged opposite the magnetic cores of the first inductance unit and the second inductance unit, respectively; and the magnetic conductor is arranged to be displaced relative to the first inductance unit and the second inductance unit within the external magnetic flux linkage between the inductance units as the rotating assembly rotates.

According to another aspect of the present disclosure, the magnetic conductor is U-shaped and includes two arms and a bridge between the arms, the two arms respectively facing the first inductance unit and the second inductance unit.

According to another aspect of the present disclosure, the mutual inductance coupling member includes a magnetic isolator made of a material having a relative permeability of less than 1, and distal magnetic poles of the first inductance unit and the second inductance unit have opposite polarities; and the magnetic isolator is configured to move between the first inductance unit and the second inductance unit, and is movable to a position where the external magnetic flux linkage between the first inductance unit and the second inductance unit is blocked.

According to another aspect of the present disclosure, the rotating assembly further includes a direct-current motor, and the force-receiving element is a driving shaft driven by the direct-current motor or a brush head; and the mutual inductance coupling member is disposed on a support component mounted to an end of the motor away from the driving shaft, and the elastic element is disposed on the support component.

According to another aspect of the present disclosure, the personal care appliance includes a resonant assembly and a coil assembly fixedly mounted relative to the handle housing, the resonant assembly including a permanent magnet, a permanent magnet bracket for mounting the permanent magnet, and a driving shaft serving as or connected to the force-receiving element, and the personal care appliance further includes a first bearing and a second bearing, where the first bearing is closer to the driving shaft relative to the second bearing, and the first bearing and the second bearing are arranged to allow reciprocal rotation of the resonant assembly relative to the handle housing about an axis of the driving shaft when magnetic field lines of the permanent magnet cut through current carried by the coil assembly; and where the rotating assembly includes the first bearing, the second bearing and the driving shaft, the rotating assembly is rotatable about a pivot axis when the external force is applied to the force-receiving element, the pivot axis passing through one of the first bearing and the second bearing and being perpendicular to a rotation axis of the driving shaft, and the other of the first bearing and the second bearing is movably arranged relative to the handle housing.

According to another aspect of the present disclosure, the rotating assembly is provided with a lever configured to amplify the amount of displacement of the force detection device, the lever including a short arm and a long arm, where the short arm is in contact with the other of the first bearing and the second bearing, the long arm extends toward the one of the first bearing and the second bearing, the mutual inductance coupling member is disposed on the long arm of the lever, and the first inductance unit and the second inductance unit are mounted on an inductor circuit board which is stationary relative to the handle housing; and an elastic element for restoring the rotating assembly is provided between the long arm and the one of the first bearing and the second bearing. Typically, a lever rotation axis of the lever is parallel to the rotation bearing of the rotating assembly.

According to another aspect of the present disclosure, the inductor circuit board is arranged perpendicular to the pivot axis passing through the first bearing, and the first inductance unit and the second inductance unit are disposed at a distance from each other on the inductor circuit board; and the mutual inductance coupling member includes a magnetic conductor or a magnetic isolator.

According to another aspect of the present disclosure, the rotating assembly is provided with a lever configured to amplify the amount of displacement of the force detection device, the lever including a short arm and a long arm, where the short arm is in contact with the other of the first bearing and the second bearing that is movably arranged, and the long arm extends away from the one of the first bearing and the second bearing.

According to another aspect of the present disclosure, the first inductance unit and the second inductance unit are disposed on the inductor circuit board, and the long arm of the lever moves relative to a surface of the inductor circuit board; and auxiliary magnetic conductors are respectively provided on the first inductance unit and the second inductance unit, such that magnetic field lines generated by the first inductance unit itself and magnetic field lines generated by the second inductance unit itself substantially face each other, and the magnetic field lines are substantially perpendicular to a direction of movement of the mutual inductance coupling member.

In addition, the present disclosure further provides a personal care appliance, including: a handle housing; a rotating assembly, including a force-receiving element extending outwardly relative to the handle housing, the rotating assembly being rotatable relative to the handle housing when an external force is applied to the force-receiving element; and a force detection device configured to detect an external force applied to the force-receiving element, the force detection device including a first element and a second element which move relative to each other, the first element being movably mounted relative to the handle housing, and the second element being fixedly mounted relative to the handle housing, where the personal care appliance further includes a lever assembly, the lever assembly including a pivot portion and a lever, the lever having a long arm and a short arm, the short arm of the lever being attached to an end of the rotating assembly opposite the force-receiving element, and the first element being mounted on the long arm.

By providing the lever assembly, the force detection device of the personal care appliance has a greater amount of displacement between the relative moving elements than without the lever assembly, resulting in greater accuracy and more sensitive response in measuring the external force.

According to another aspect of the present disclosure, the personal care appliance further includes: a handle housing; and a rotating assembly, including a force-receiving element extending outwardly relative to the handle housing, where the rotating assembly is rotatable relative to the handle housing when an external force is applied to the force-receiving element; and the short arm is in contact with an end of the rotating assembly away from the force-receiving element, and the lever assembly further includes an elastic element for restoring.

According to another aspect of the present disclosure, the personal care appliance includes a resonant assembly and a coil assembly fixedly mounted relative to the handle housing, the resonant assembly including a permanent magnet, a permanent magnet bracket for mounting the permanent magnet, and a driving shaft serving as or connected to the force-receiving element, where the rotating assembly includes at least one bearing and the driving shaft held by the bearing, the bearing being arranged to allow reciprocal rotation of the resonant assembly relative to the handle housing about an axis of the driving shaft when magnetic field lines of the permanent magnet cut through current carried by the coil assembly; and the rotating assembly is rotatable about a pivot axis when the external force is applied to the force-receiving element, the pivot axis passing through the at least one bearing and being perpendicular to a rotation axis of the driving shaft, and the pivot axis of the rotating assembly being parallel to a lever rotation axis of the lever.

According to another aspect of the present disclosure, the personal care appliance further includes a first bearing and a second bearing, where the first bearing is closer to the driving shaft relative to the second bearing; the pivot axis of the rotating assembly passes through one of the first bearing and the second bearing, and the other of the first bearing and the second bearing is movable relative to the handle housing; and the short arm is in contact with the other bearing.

According to another aspect of the present disclosure, the pivot bearing passes through the first bearing, and the second bearing is movable relative to the handle housing; the short arm is in contact with the second bearing; and the lever assembly further includes an elastic element for restoring, the elastic element being disposed between the long arm and the first bearing.

## Brief Description of the Drawings

FIG. 1 shows a perspective view of an electric toothbrush according to a first embodiment of the present disclosure.

FIG. 2 shows a perspective view of an internal structure of the electric toothbrush according to the first embodiment of the present disclosure.

FIG. 3 shows an enlarged partial perspective view of a force detection device of the electric toothbrush according to the first embodiment of the present disclosure.

FIG. 4 shows an enlarged partial perspective view of a force detection device of an electric toothbrush according to a second embodiment of the present disclosure.

FIG. 5 shows a coordinate graph of the relationship between the magnetic flux and the inductance involved in the force detection device according to the first and second embodiments.

FIG. 6 shows a perspective view of an internal structure of an electric toothbrush according to a third embodiment of the present disclosure.

FIG. 7 shows a perspective view of the internal structure of the electric toothbrush according to the third embodiment of the present disclosure from another perspective.

FIG. 8 shows a perspective view of the internal structure of the electric toothbrush according to the third embodiment of the present disclosure, with the entire handle housing and the components behind the force detection device removed.

FIG. 9 shows a perspective view of an electric toothbrush according to a fourth embodiment of the present disclosure.

FIG. 10 shows a perspective view of an internal structure of the electric toothbrush according to the fourth embodiment of the present disclosure.

FIG. 11 shows an enlarged partial perspective view of the internal structure of the electric toothbrush according to the fourth embodiment of the present disclosure.

FIG. 12 shows a perspective view of a force detection device of the electric toothbrush according to the fourth embodiment of the present disclosure.

FIG. 13 shows a perspective view of a force detection device of an electric toothbrush according to a fifth embodiment of the present disclosure.

FIG. 14 shows a perspective view of the force detection device of the electric toothbrush according to the fifth embodiment of the present disclosure from another perspective.

FIG. 15 shows a perspective view of a force detection device of an electric toothbrush according to a sixth embodiment of the present disclosure.

FIG. 16 shows a perspective view of a partial internal structure of an electric toothbrush according to a seventh embodiment of the present disclosure.

FIG. 17 shows a perspective view of a force detection device of the electric toothbrush according to the seventh embodiment of the present disclosure.

FIGS. 18 and 19 show schematic circuit diagrams according to a preferred embodiment of the present disclosure.

FIG. 20 shows a circuit diagram of the second embodiment.

List of reference signs:

1, 201, 301 Brush head
2 Handle device
4, 240 Control circuit board
5. Rotating assembly;
11, 311 Cleaning element
21, 221, 321 Handle housing
31, 231 Rotational pivot
32, 232, 332, 632 Driving shaft
33 Interface component
34 Gearbox cover
35 Gearbox
41, 241, 341, 441, 641 First inductance unit
42, 242, 342, 442, 642 Second inductance unit
51, 151, 251 Direct-current micro motor
52, 152, 252 Support component
53 Motor circuit board
55, 155, 255, 355, 655 Helical spring
57, 657 First magnet
58, 658 Second magnet
150 Permanent magnet
250 Magnetic conductor
310 Permanent magnet
311 Coil assembly
313, 413 First bearing
314, 614 Second bearing
330, 430, 530, 630 Lever
333 Magnetic conductor
336 Lever pivot
346, 347 Auxiliary magnetic conductor
451, 551 Inductor circuit board
455 Magnetic isolator
L1', L2' Inductance unit in a circuit

C Resonant capacitor
R Sampling resistor
Ui Input voltage
Uo Output voltage
I/O A/D sampling port of MCU
W1 Direction of rotation of a first rotating assembly when F1 > F2
W2 Direction of rotation of the first rotating assembly when F2 > F1
W3 Central axis of the driving shaft
W4 Longitudinal direction of the cleaning element
W5 Pivot axis
W6 Direction of reciprocal rotation of the second bearing 214 about W5
F1 External force applied to bristles
F2 Elastic force generated by an elastic element
F3 Elastic force generated by an elastic element of the motor

**Detailed Description of Embodiments**

The disclosure will be further described below in conjunction with specific embodiments and the accompanying drawings. In the following description, more details are set forth to facilitate a thorough understanding of the disclosure. However, it is obvious that the disclosure can be implemented in various other ways different from those described herein. Those skilled in the art can make similar generalizations and deductions according to practical application situations without departing from the connotation of the disclosure. Therefore, the content of this specific embodiment should not be construed as limiting the protection scope of the disclosure.

In the following description, the term "front end/-front side" refers to the end or side close to a position where a cleaning element of a brush head of an electric toothbrush is located, and the term "rear end/rear side" refers to the end or side remote from the position where the cleaning element of the brush head of the electric toothbrush is located.

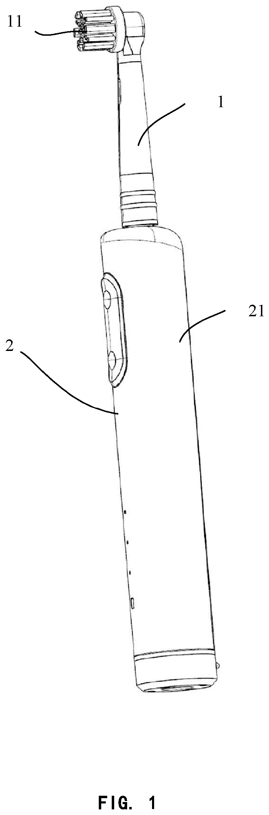

FIG. 1 shows a perspective view of the outline of an electric toothbrush according to a first embodiment of the present disclosure. A driving device of the electric toothbrush is a direct-current micro motor 51. As shown in FIG. 1, the electric toothbrush mainly includes a brush head 1 and a handle device 2. The brush head 1 is provided with a cleaning element 11 such as bristles in a force application direction. The brush head 1 is mounted in a form-fit manner to a driving shaft of the handle device 2 that extends to the front side and serves as a force-receiving element. After the brush head 1 is mounted to the handle device 2, it can be understood that the brush head 1, in particular the part provided with the cleaning element, serves as the force-receiving element of the electric toothbrush.

The handle device 2 of the electric toothbrush mainly includes a handle housing 21 and an internal core mechanism. For an electric toothbrush driven by a direct-current micro motor 51, the internal core mechanism mainly includes the direct-current micro motor 51, a gearbox 35, a gearbox cover 34, a driving shaft 32, an interface component 33 located on the gearbox cover 34, a control circuit board 4, a motor circuit board 53 on which the direct-current micro motor 51 is mounted, and a force detection device.

In the present disclosure, some of the components of the internal core mechanism of the electric toothbrush are fixedly connected together to form a rotating assembly which is rotatable relative to the handle housing. When the position of the cleaning element 11 of the brush head 1 is forced in use, the rotating assembly will rotate about a pivot 31, and the force detection device will detect the external force applied to the cleaning element 11 as the rotating assembly moves. Typically, the external force to be detected is applied in a longitudinal direction of the cleaning element 11.

In the first embodiment, the rotating assembly 5 mainly includes the driving shaft 32 for mounting the brush head, the interface component 33, the gearbox cover 34, the gearbox 35, the direct-current micro motor 51, a support component 52 and the motor circuit board 53 of the internal core mechanism, and these components are stationary relative to each other after installation. The driving shaft 32 and the interface component 33 extend from a hole in a front end of the handle housing 1, and the other components of the rotating assembly are accommodated in the handle housing. The gearbox cover 34 is provided with rotational pivots 31 arranged in pairs. Preferably, the rotational pivots 31 integrally extend in opposite directions from the gearbox cover 34, and the rotational pivots 31 provide rotational fulcrums for the rotating assembly 5. The rotating assembly rotates about the rotational pivot 31 when it is forced.

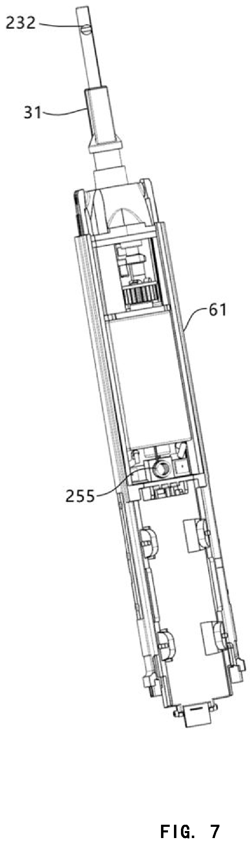

With reference to FIG. 7, preferably, the handle housing 21 is internally provided with a rotating assembly bracket 61. The rotating assembly bracket 61 is stationary relative to the handle housing 21. The rotating assembly bracket 61 is provided with pivoting holes or recesses adapted to be rotationally connected to the rotational pivots 31, such that the rotating assembly 5 rotates relative to the rotating assembly bracket 61 and thus also relative to the handle housing 21 when subjected to an external force. In other alternative embodiments, the handle housing may replace the rotating assembly bracket.

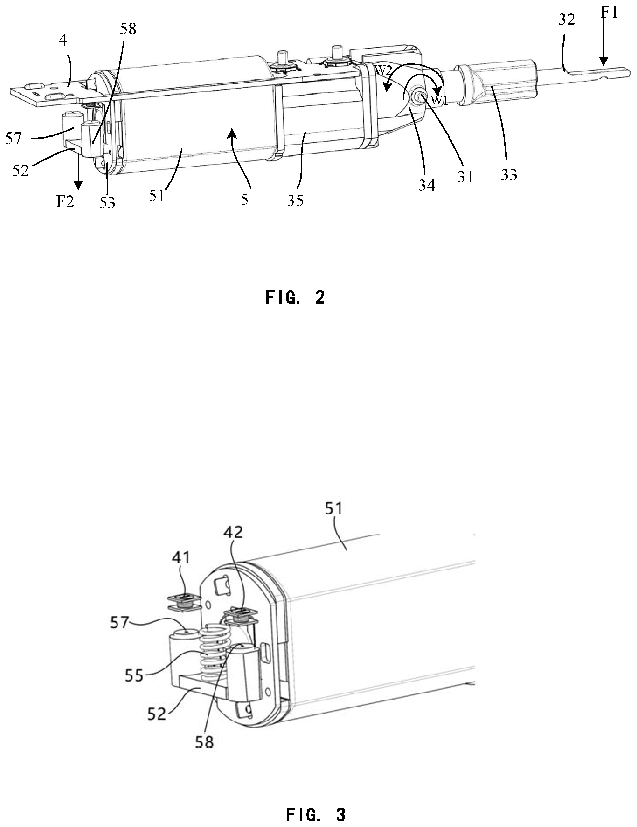

In order to return the rotating assembly to its initial position after the external force is removed, an elastic element for restoring is provided between the rotating assembly 5 and the rotating assembly bracket 61. In a preferred embodiment, the elastic element is a helical spring 55 as shown in FIG. 3. The elastic element is constrained on one side by the rotating assembly bracket 61 and on the other side by the same rotating assembly bracket 61. Specifically, one end of the helical spring 55 is attached to a contact end of the first rotating assembly bracket 61, while the other end of the helical spring 55 is attached to the support component 52 provided in the rotating assembly 5, such that the helical spring 55 provides an elastic movable connection between the rotating assembly bracket 61 and the rotating assembly 5, and the helical spring 55 can elastically stretch and contract along an axial direction of its cylindrical shape. In the first embodiment, the support component 52 is fixed to the tail of the motor 51 together with the motor circuit board 53. The motor circuit board 53 and associated wires provide the electrical connection between the direct-current micro motor 51 and the control circuit board 4.

In the first embodiment, the handle device 2 of the electric toothbrush is also specially provided with the force detection device for detecting the external force applied to the brush head, providing an alert if the external force exceeds a threshold value. In the first embodiment, as shown in FIG. 3, the force detection device includes a pair of permanent magnets and a pair of inductance units. The pair of magnets are a first magnet 57 and a second magnet 58, respectively. The two magnets 57 and 58 are fixedly mounted at a distance from each other on the support component 52. The first inductance unit 41 and the second inductance unit 42 are soldered to the control circuit board which is stationary relative to the handle housing. The two inductance units 41, 42 are also spaced apart from each other by a distance substantially equal to the distance between the magnets 57 and 58, such that the first magnet 57 is directly opposite the fixed magnetic core of the first inductance unit and the second magnet 58 is directly opposite the fixed magnetic core of the second inductance unit.

The inductance unit in the present disclosure specifically refers to an inductive unit including a fixed magnetic core and an electrical conductor surrounding the fixed magnetic core. For example, the inductance unit is an inductor formed by winding a coil of a number of turns around a magnetic core made of ferrite. For another example, the inductance unit is a surface-mount inductor widely used in the market; or may be an inductance unit composed of a coil with a hollow structure, in a hollow part of which a magnetic core made of ferrite is added, the magnetic core and the coil with a hollow structure being relatively stationary. The fixed magnetic core of the inductance unit may also be composed of a plurality of beads or silicon steel sheets. The inductance units may also be widely used in chip ferrite beads, inductors, chip VHF inductors, and chip inductance units with multilayer ferrite as the magnetic core (multilayer chip inductors).

When the brush head 1 is subjected to the external force to guide the rotation of the rotating assembly about the rotational pivot 31, the first magnet 57 and the second magnet 58 move closer to the first inductance unit 41 and the second inductance unit 42. During this process, the first magnet 57 generates a magnetic flux passing through the magnetic core of the first inductance unit 41, such that the magnetic core of the first inductance unit 41 can enter a magnetic saturation state. Similarly, the second magnet 58 generates a magnetic flux passing through the magnetic core of the second inductance unit 41, such that the magnetic core of the second inductance unit 41 can enter a magnetic saturation state.

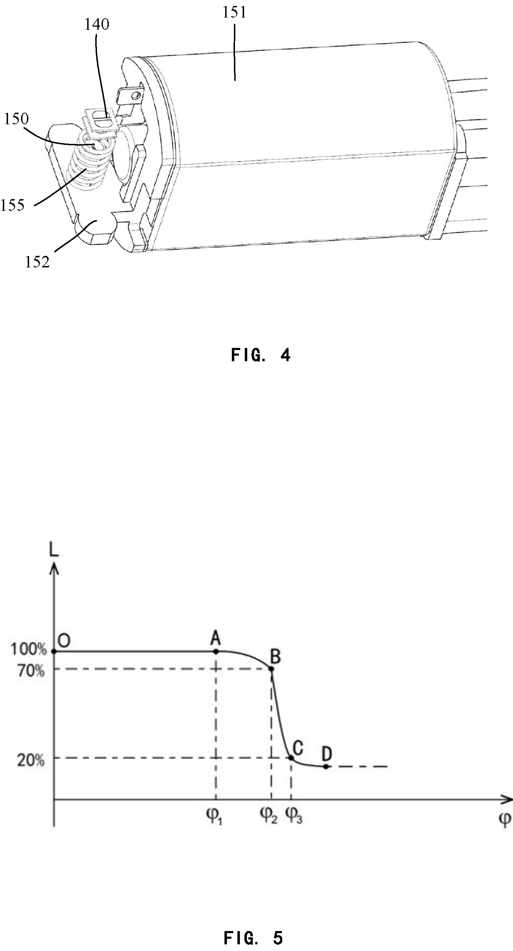

According to the physical definition of the inductance of the inductance unit, $L1 = \varphi/I$, where L1 is the inductance of the inductance unit, I is the current through the inductance unit, and $\varphi$ is the magnetic flux generated by the inductance unit, when the magnetic core of the inductance unit enters the magnetic saturation state, the increase in the current of an inductor coil cannot bring about the corresponding generation of the magnetic flux, so that when the magnetic core of the inductance unit enters the magnetic saturation state, the self-inductance decreases rapidly, as shown in the graph of FIG. 5. The accelerated change in self-inductance can be used to reflect the applied external force more quickly and accurately.

In the first embodiment, the first magnet 57 and the second magnet 58 may be arranged such that when the first magnet 57 and the second magnet 58 are closest to the first inductance unit 41 and the second inductance unit 42, the fixed magnetic cores of the first inductance unit 41 and the second inductance unit 42 enter the magnetic saturation state or the magnetic saturation state of the fixed magnetic core is intensified; and when the first magnet 57 and the second magnet 58 are farthest away from the first inductance unit 41 and the second inductance unit 42, the fixed magnetic cores of the first inductance unit 41 and the second inductance unit 42 exit the magnetic saturation state, or the magnetic saturation levels of the fixed magnetic cores are reduced. By "closest to" is meant that, under the combined effect of the external force F1 and an elastic force F2 (as shown in FIG. 2) (F1 > F2), the first magnet 57 and the second magnet 58 move with the first rotating assembly 5 to be closest to the first inductance unit 41 and the second inductance unit 42. By "furthest away" is meant that, under the combined effect of the external force F1 and the elastic force f2 (F1 < F2), the first magnet 57 and the second magnet 58 move with the first rotating assembly 5 to be furthest away from the first inductance unit 41 and the second inductance unit 42. By adjusting the volume or size or surface remanence of the first magnet 57 and the second magnet 58, and the distance of the first magnet 57 and the second magnet 58 relative to the magnetic core of the first inductance unit 41 and the magnetic core of the second inductance unit 42, it is possible to enable the magnetic cores of the inductance units 41 and 42 to enter and exit the magnetic saturation state or to change the magnetic saturation level of the magnetic cores within the displacement range of the first magnet 57 and the second magnet 58. The "magnetic saturation state of the magnetic core" mentioned here refers to the condition where, under the influence of an external magnetic flux, the inductance of the detection inductance unit begins to decrease from its nominal inductance. The "nominal inductance" refers to the inductance of the detection inductance unit in a state with no external magnetic field and no current flowing through the inductance unit.

Referring to FIG. 5, point O represents the unsaturated fixed magnetic core of the inductance unit, and point A represents the initial saturation critical point of the magnetic core of the inductance unit. The inductance corresponding to points O and A is the nominal inductance. The internal magnetic flux of the magnetic core corresponding to point A is $\varnothing1$. The OA segment represents the fixed magnetic core of the inductance unit being in a magnetically unsaturated state. The AB segment represents the magnetic core of the inductance unit entering an initial saturation state. In the example of FIG. 5, point B is set as the moderate saturation critical point of the fixed magnetic core, preferably set to correspond to an inductance of 70% of the nominal inductance, and point B corresponds to the internal magnetic flux of $\varnothing2$ of the fixed magnetic core. The BC segment represents the fixed magnetic core of the inductance unit entering a moderate saturation state. In the example of FIG. 5, point C is set as the deep saturation critical point of the fixed magnetic core, preferably set to correspond to an inductance of 20% of the nominal inductance, and point C corresponds to the internal magnetic flux of $\varnothing3$ of the magnetic core. When the internal magnetic flux of $\varnothing$ of the magnetic core is greater than $\varnothing3$, the magnetic core of the inductance unit enters a deep saturation state, and the CD segment represents the magnetic core of the inductance unit entering the deep saturation state. Furthermore, point D is the full magnetic saturation point of the fixed magnetic core, at which point the fixed magnetic core is in a full magnetic saturation state where the magnetic flux of the fixed magnetic core no longer increases even if the external magnetic field increases. It should be noted that the ratios of the nominal inductance represented by points B and C are merely illustrative and may be modified depending on the characteristics of the inductance unit selected. In other alternative embodiments, the moderate saturation critical point B of the fixed magnetic core may be set as a magnetic state of the fixed magnetic core where the corresponding inductance is 60-80% of the nominal inductance; and the deep saturation critical point of the fixed magnetic core may be set as a magnetic state of the fixed magnetic core where the corresponding inductance is in the range of 10% to 30% of the nominal inductance. In general, the rate of change of the inductance of the inductance unit with respect to the internal magnetic flux of the fixed magnetic core in the BC segment is significantly greater than the corresponding rates of change in the AB segment and the CD segment. Preferably, the volume or size or surface remanence of the first magnet 57 and the second magnet 58 and the distance of the first magnet 57 and the second magnet 58 relative to the fixed magnetic core of the first inductance unit 41 and the fixed magnetic core of the second inductance unit 42 are set such that when the magnets 57 and 58 are closest to the respective opposing inductance units 41 and 42, the magnets 57 and 58 cause the magnetic flux through the fixed magnetic cores of the inductance units 41 and 42 to be greater than $\varnothing 2$ and less than $\varnothing 3$. More preferably, the magnetic flux generated by the magnet during movement and passing through the magnetic core of the inductance unit is greater than $\varnothing 2$ and less than $\varnothing 3$. By the fixed magnetic core entering the magnetic saturation state, it is meant that the magnetic state of the fixed magnetic core moves from a point located on the segment OA in FIG. 5 along the curve of the segment OA and the segment AD, passing point A, and advancing toward point D. By the magnetic core exiting the magnetic saturation state, it is meant that the magnetic state of the magnetic core moves from a point located on the segment AD in FIG. 5 along the curve of the segment DA and the segment AO, passing point A, and advancing toward point O. By the magnetic saturation state of the magnetic core being intensified, it is meant that the magnetic saturation state of the magnetic core moves from a point located on the segment AD in FIG. 5 along the curve of the segment AD, advancing toward point D. By the magnetic saturation state of the magnetic core being alleviated, it is meant that the magnetic saturation state of the magnetic core moves from a point located on the segment AD in FIG. 5 along the curve of the segment DA, advancing toward point A.

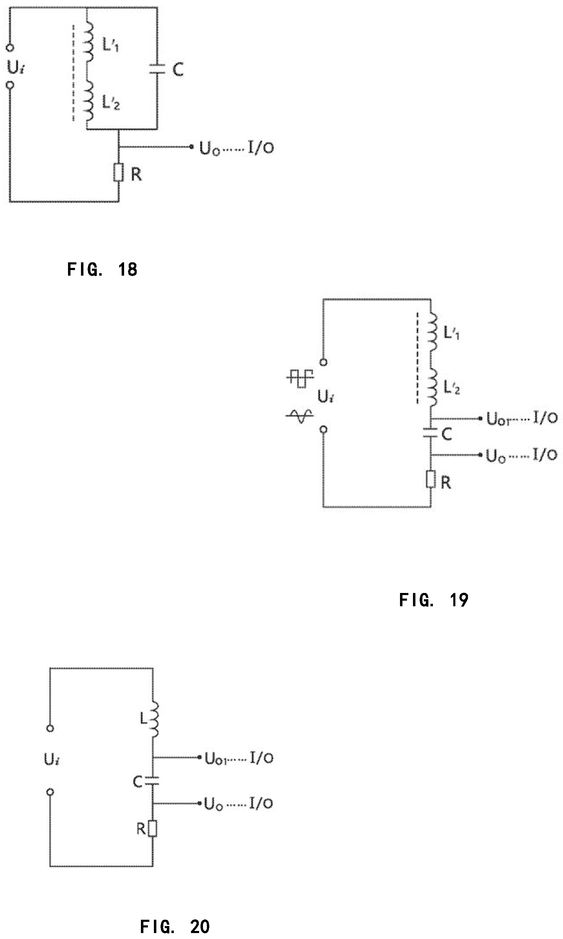

FIGS. 18 and 19 show the circuit layout diagrams related to the first inductance unit 41 and the second inductance unit 42.

As shown in FIG. 19, where the first inductance unit 41 corresponds to the inductance unit L1' and the second inductance unit 42 corresponds to the inductance unit L2', the two inductance units L1' and L2' are connected in series with each other, and in series with a resonant capacitor C and a sampling resistor R. The total inductance of the two inductance units L1' and L2' and the resonant capacitor C can form an LC resonant circuit or a resonant circuit. A sinusoidal or rectangular wave with a preset frequency f0 is input to an input terminal of the circuit. The voltage Uo across the sampling resistor is rectified and filtered, and then an AD sampling is performed via an I/O port of an MCU to acquire the magnitude of the voltage across the sampling resistor, thereby enabling the detection of voltage variations on the sampling resistor. Obviously, F1 applied to the cleaning element of the brush head 1 can change the distance between the magnets and the inductance units 41, 42, thereby affecting the total inductance L of the detection circuit, and thus affecting the detection of the voltage Uo across the sampling resistor R. Further, the MCU can equivalently identify the magnitude of the external force F1 applied to the cleaning element 11 by identifying different voltages across the sampling resistor R, thereby enabling detection of the magnitude of the external force applied to the bristles (cleaning element) 11. When the applied external force F1 is too small (e.g., < 1.5 N), the MCU may output a signal indicating that the force is too small, for example, by displaying it with an LED or by providing an audible alert. Similarly, when the applied external force F1 is within a suitable range (e.g., 1.5 N-2.5 N), the MCU may output a signal indicating that the magnitude of the force is appropriate, for example, by displaying it with an LED or by providing an audible alert. Similarly, when the applied external force F1 is greater than a set value (e.g., 2.5 N), the MCU may output a signal indicating that the force is too large, also by displaying it with an LED or by providing an audible alert. Obviously, the sampled voltage may also come from $U_{O1}$ in FIG. 19, that is, the total voltage across the resistor R and the capacitor C is sampled, and the detection function described above can also be achieved, and will not be described in detail herein.

The detection circuit shown in FIG. 18 is similar to the detection circuit shown in FIG. 19, with the difference between the two being an LC resonant circuit. FIG. 18 shows an LC parallel resonant circuit, and FIG. 19 shows an LC series resonant circuit. FIG. 18 also enables the detection function described above.

FIG. 4 shows a second embodiment of the present disclosure, which relates to an electric toothbrush using a direct-current micro motor 151, in which the main configuration of the rotating assembly is the same as that of the first embodiment, and will not be described in detail herein.

The difference from the first embodiment is that the force detection device in the second embodiment includes only one permanent magnet 150 and only one inductance unit 140. The permanent magnet 150 is preferably disposed in a hollow portion of a helical spring 155, i.e., the helical spring 155 surrounds the permanent magnet 150. However, the permanent magnet 150 and the helical spring 155 may be arranged in a separate manner. The permanent magnet 150 and the helical spring 155 are disposed together on the support component 152 fixed to a rear end of the motor 151.

The operation principle of the force detection device of the second embodiment is the same as that of the first embodiment. Both utilize the principle that after the magnetic core of the inductance unit 140 is caused to enter the magnetic saturation state by means of the magnet 150, the inductance decreases at an accelerated rate, thereby enabling more accurate detection of the external force applied to the brush head 1. FIG. 20 shows a circuit diagram of the second embodiment, in which a single inductance unit L is connected in series with a resonant capacitor C and a sampling resistor R, and the detection function described above can also be achieved.

In the first and second embodiments described above, the permanent magnets may also be replaced by electromagnets such as energized coils, as long as the electromagnets can likewise generate a magnetic flux passing through the fixed magnetic core of the inductance unit to cause the fixed magnetic core of the inductance unit to enter and exit the magnetic saturation state, or to intensify and alleviate the magnetic saturation state of the fixed magnetic core of the inductance unit in the AD segment after the fixed magnetic core has entered the magnetic saturation state as shown in FIG. 5.

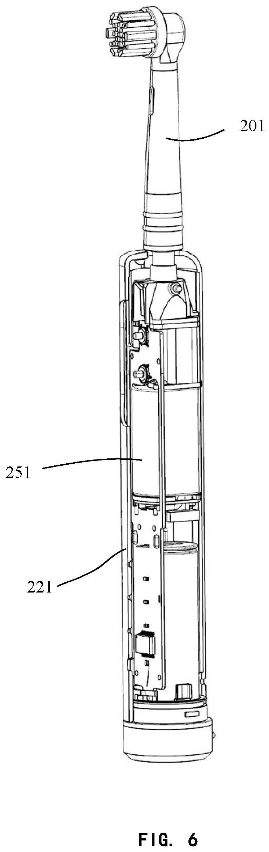

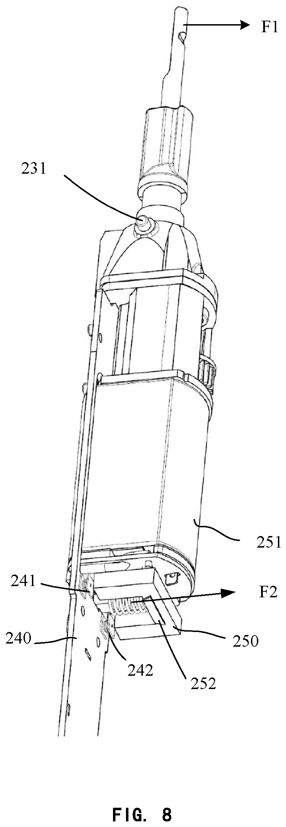

FIGS. 6 to 8 show a third embodiment of the present disclosure. In the third embodiment, inside the handle housing 221, the force detection device disposed on a rear side of the motor 251 includes a magnetic conductor 250. The magnetic conductor 250 here is formed of a material having a relative permeability of at least 10, for example, made of a high-permeability material such as ferrite or a silicon steel sheet. In the third embodiment, as shown in FIG. 8, the magnetic conductor 250 is U-shaped, including two arm portions and an intermediate bridge portion. The two arm portions are respectively opposite the fixed magnetic cores of the first inductance unit 241 and the second inductance unit 242, and there is a movement gap between an end face of the arm portion and the fixed magnetic core. The magnetic conductor 250 is fixed to the support component 252 via glue, for example, by means of a dovetail groove provided on the intermediate bridge portion.

The two inductance units 241, 242 in the third embodiment are the same as those in the first embodiment, each referring to an inductive unit including a fixed magnetic core and an electrical conductor surrounding the fixed magnetic core. The first inductance unit 241 and the second inductance unit 242 are fixed to the control circuit board 240 which is arranged stationary relative to the handle housing 221, and form respective distal magnetic poles in a direction away from the control circuit board 240. At the same time, the respective distal magnetic poles of the first inductance unit 241 and the second inductance unit 242 that are generated when current flowing through them have opposite polarities. For example, the distal magnetic pole of the first inductance unit 241 is an N pole, and the distal magnetic pole of the second inductance unit 242 is an S pole. In other alternative embodiments, the distal magnetic pole of the first inductance unit 241 and the distal magnetic pole of the second inductance unit 242 may have the same polarity.

In the third embodiment, the magnetic conductor 250 moves in response to an external force applied to the brush head 201 or the driving shaft 232, and the magnetic conductor 250 moves within the external magnetic flux linkage between the inductance units 241, 242, such that the coupling coefficient between the two inductance units 241, 242 is changed, and the mutual inductance between the inductance units 241, 242 is thus changed, thereby enabling the detection of the external force.

Specifically, the external magnetic flux linkage generated by the current of the first inductance unit 241 itself passes through the fixed magnetic core of the second inductance unit 242, forming the mutual inductance from the first inductance unit 241 to the second inductance unit 242. Similarly, the second inductance unit 242 also generates mutual inductance on the first inductance unit. There is an external magnetic circuit between the first inductance unit 241 and the second inductance unit 242. The magnitude of the reluctance of the external magnetic circuit affects the magnitude of the magnetic flux from one inductance unit into the other inductance unit. The reluctance of the external magnetic circuit affects the coupling coefficient k between the two inductances. The smaller the reluctance of the external magnetic circuit, the closer the coupling coefficient k between the inductance units is to 1. The reluctance of the magnetic conductor is much less than that of air, and the closer the magnetic conductor 250 is to the first inductance unit 241 and the second inductance unit 242, the faster the coupling coefficient k between the first inductance unit 241 and the second inductance unit 242 will increase. According to the principles of physics,

$$M_{12} = k * \sqrt{L1 * L2}$$

where $M_{12}$ is the mutual inductance between the first inductance unit 241 and the second inductance unit 242, k is the coupling coefficient between the two inductance units, as applied in the third embodiment, L1 is the self-inductance of the first inductance unit 241, and L2 is the self-inductance of the second inductance unit 242. Similarly, the mutual inductance from the first inductance unit 241 to the second inductance unit 242 is $M_{21}$, and $M_{12} = M_{21}$.

As shown in FIGS. 18 and 19, the total inductance L of the inductive load in the detection circuit is expressed as follows:

$$L = L1 + L2 + 2 * M_{12}.$$

The two arm portions of the magnetic conductor 250 are respectively opposite the first inductance unit 241 and the second inductance unit 242, and will affect the coupling coefficient between the two inductance units 241, 242 as the magnetic conductor 250 approaches or moves away from the first inductance unit 241 and the second inductance unit 242, thereby affecting the mutual inductance between the two inductance units 241, 242. Further, the total inductance L formed by the combination of the first inductance unit 241 and the second inductance unit 242 in the circuit is affected as the magnetic conductor 55 approaches or moves away from the inductance unit 241, 242. M12 may be positive or negative, depending on the direction of the external magnetic flux and the self-magnetic flux of the inductance units 241, 242. It is positive when the magnetic fluxes are in the same direction and negative when they are in opposite directions.

When the external force F1 is applied to the brush head 1 and the torque generated by F1 relative to the rotational pivot 231 is greater than the torque generated by the elastic force F2 of the helical spring 255 relative to the rotational pivot 231, the rotating assembly 5 will rotate about the rotational pivot 231 in a direction W1 (see FIG. 2). The helical spring 255 located on the support component 252 is in a state of tending to be compressed or further compressed. The magnetic conductor 250 located on the rotating assembly approaches the distal magnetic poles of the first inductance unit 42 and the second inductance unit 41 on the control circuit board 4, and the total inductance in the circuit shown in FIGS. 18 and 19 becomes greater. When the elastic force F2 of the helical spring 255 is greater than F1, the rotating assembly 5 will rotate about the first rotational pivot 231 in a direction W2 (see FIG. 2), the magnetic conductor 250 moves away from the distal magnetic poles of the first inductance unit 241 and the second inductance unit 242 on the control circuit board 240, and the total inductance in the circuit becomes smaller.

The specific application of the circuit shown in FIGS. 18 and 19 is the same as described in the first embodiment, and will not be described in detail herein.

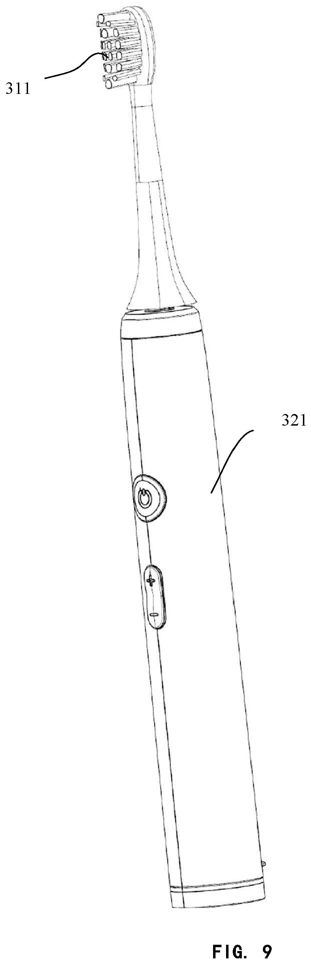

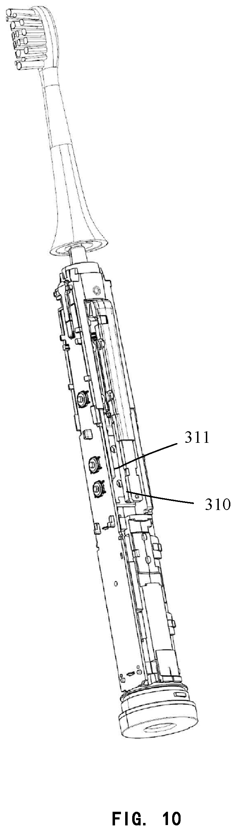

FIGS. 9 to 12 show a fourth embodiment of the present disclosure. Unlike the previous embodiment, as shown in FIG. 10, the electric toothbrush includes a permanent magnet 310 and a coil assembly 311 located within the handle housing 321. Magnetic field lines of the permanent magnet 310 cut through current carried by the coil assembly 311, such that a resonant elastic element fixedly coupled to the permanent magnet 310, and a mechanical assembly form a resonant assembly, and the permanent magnet 310 reciprocally rotates about an axis of the driving shaft 332. The mechanical assembly of the resonant assembly includes components that can move relative to the handle housing, such as the permanent magnet 310 and a permanent magnet bracket for mounting the permanent magnet 310. The driving shaft 332 is connected to the brush head 301 in a form-fit manner, and the driving shaft 332 drives the cleaning element 311 to reciprocally rotate about a central axis W3 of the driving shaft 313. In the electric toothbrush of the fourth embodiment, the driving shaft 332 or the brush head 301 can be regarded as the force-receiving element thereof. Patent document CN 104617732 B discloses an electric toothbrush with a similar resonant assembly, and the relevant content of the patent document is incorporated herein by reference.

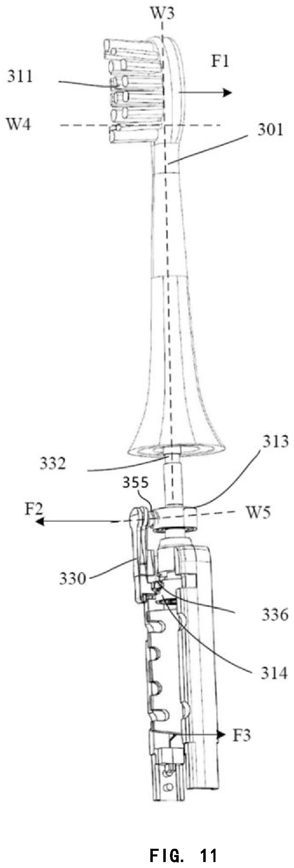

As shown in FIG. 11, the electric toothbrush further includes a first bearing 313 and a second bearing 314 spaced apart from each other by a distance along the direction of the central axis W3 of the driving shaft 332. The first bearing 313 is closer to the force-receiving element than the second bearing 314. The driving shaft 332 is fastened together with the two bearings 313, 314, thereby forming a rotating assembly of the electric toothbrush. The rotating assembly rotates about a pivot axis W5 passing through the first bearing 313 close to the brush head. The first bearing 313 has inner and outer rings and balls arranged between the inner and outer rings. The outer ring is arranged stationary relative to the handle housing, and the inner ring is movable relative to the handle housing. When an external force is applied in the longitudinal direction W4 of the cleaning element 311 on the brush head perpendicular to the axis of the driving shaft, the first bearing 313 provides a pivot axis for the rotating assembly, that is, the pivot axis W5 passes through the first bearing 313. In some particular embodiments, the pivot axis W5 passes through radially opposed balls of the first bearing. In a preferred embodiment, the axis W5 passes through the geometric center of the first bearing 313 and is substantially perpendicular to both the longitudinal direction W4 of the cleaning element 311 on the brush head and the central axis W3 of the driving shaft 332.

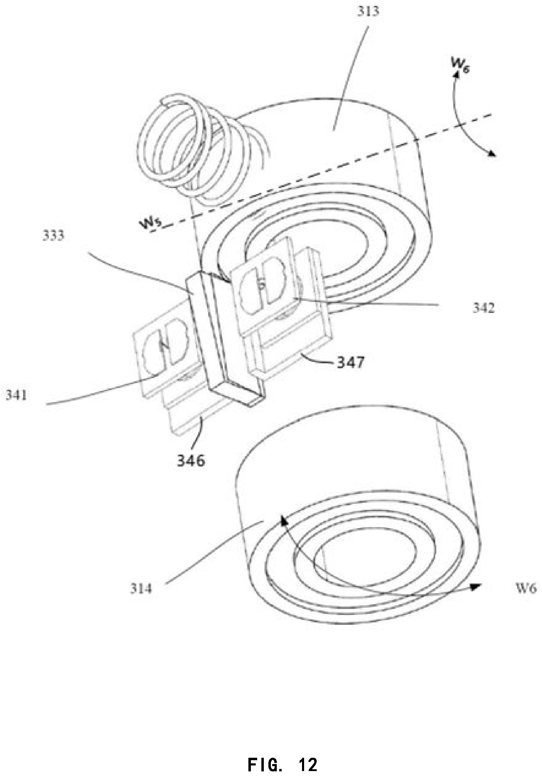

As shown in FIG. 10, the first bearing 313 is fixedly mounted to a left transducer housing 316 and a right transducer housing 317. The left transducer housing 316 and the right transducer housing 317 are mounted inside the handle housing to be stationary relative to the handle housing, that is, the outer ring of the first bearing 313 is stationary relative to the handle housing, while the second bearing 314 is movable relative to the left and right transducer housings or the handle housing, and the rotational movement of the second bearing 314 is indicated as W6 in FIG. 12. The force detection device in the first, second and third embodiments may be disposed near the second bearing 314 to cause a displacement between two elements of the force detection device that can move relative to each other (e.g., the magnet and the inductance unit, or the magnetic conductor and the inductance unit) as the rotating assembly rotates about the axis W5, thereby indicating whether the force on the force-receiving element exceeds a threshold.

In such an electric toothbrush, the force arm in the rotating assembly on the side of the pivot axis W5 away from the force-receiving element has a shorter length than in the first embodiment. Typically, the force arm formed between the first bearing 313 and the second bearing 314 relative to the axis W5 is smaller than the force arm formed by the force-receiving element relative to the pivot axis W5. When the rotating assembly rotates about the pivot axis W5, the displacement of the second bearing 314 is smaller than the displacement of the force-receiving element. If the force detection device of the first, second and third embodiments is disposed at the second bearing 314, there may be a problem of insufficient measurement accuracy due to the small amount of displacement of the relative moving element. To solve this problem, the electric toothbrush of the fourth embodiment is provided with a lever assembly for amplifying the displacement of the relative moving element of the force detection device.

Specifically, as shown in FIG. 11, the lever assembly includes a lever 330. A lever pivot 336 for providing a lever rotation axis is arranged on the lever 330. The lever pivot 336 is mounted, for example, to the housing of a transducer that is stationary relative to the handle housing 321, or is directly connected to the handle housing 321. The lever 330 includes a short arm and a long arm, where the short arm is in contact with the second bearing 314, and the long arm is connected to the first bearing 313 via a helical spring 355. In this way, when the external force F1 is applied to the force-receiving element, the rotating assembly rotates about the pivot axis W5. The pivot axis W5 passes through the first bearing 313 and is substantially parallel to the pivot axis of the lever pivot 336. The elastic element fixedly coupled to the permanent magnet 310 will generate an elastic resistance force F3, and the helical spring 355 will generate an elastic force F2. The elastic force F2 transmits the resistance force through the second lever 330 to the second bearing 314. In this way, by the amplification of the lever 330, a larger amount of displacement of the relative position component in the force detection device can be obtained on the long arm of the lever 330, thus enabling more accurate measurement of the external force.

Specifically, as shown in FIGS. 11 and 12, the force detection device includes a relative moving magnetic conductor 333 and a pair of inductance units 341 and 342. The magnetic conductor 333 is fixed on the long arm of the lever 330, that is, the magnetic conductor 333 is movably mounted relative to the handle housing, while the inductance units 341 and 342 are mounted stationary relative to the handle housing, for example, on an inductor circuit board mounted stationary relative to the handle housing. Preferably, the inductor circuit board is fixed to the housing of the transducer. As shown in FIG. 12, the direction of movement of the magnetic conductor 333 is approximately parallel to the direction of the magnetic field lines inside the fixed magnetic cores of the first inductance unit 341 and the second inductance unit 342. Thus, the magnetic conductor 333 moves in response to an external force applied to the brush head, and the movement of the magnetic conductor 333 within the external magnetic flux linkage between the inductance units 341, 342 causes a change in the coupling coefficient between the inductance units 341, 342, and the mutual inductance between the inductance units 341, 342 is thus changed, thereby enabling the detection of the external force.

Preferably, in order to enhance the effect of the magnetic conductor 333 on the external magnetic flux linkage between the inductance units 341, 342, in the fourth embodiment, L-shaped auxiliary magnetic conductors 346, 347 are mounted to the distal magnetic poles of the inductance unit 341 and the inductance unit 342 such that the magnetic field lines generated by the inductance unit 341 itself and the magnetic field lines generated by the inductance unit 342 itself substantially face each other, and the magnetic field lines of the two are substantially perpendicular to the direction of movement of the magnetic conductor 333, thereby enhancing the effect of the movement of the magnetic conductor 333 on the mutual inductance between the inductance unit 341 and the inductance unit 342.

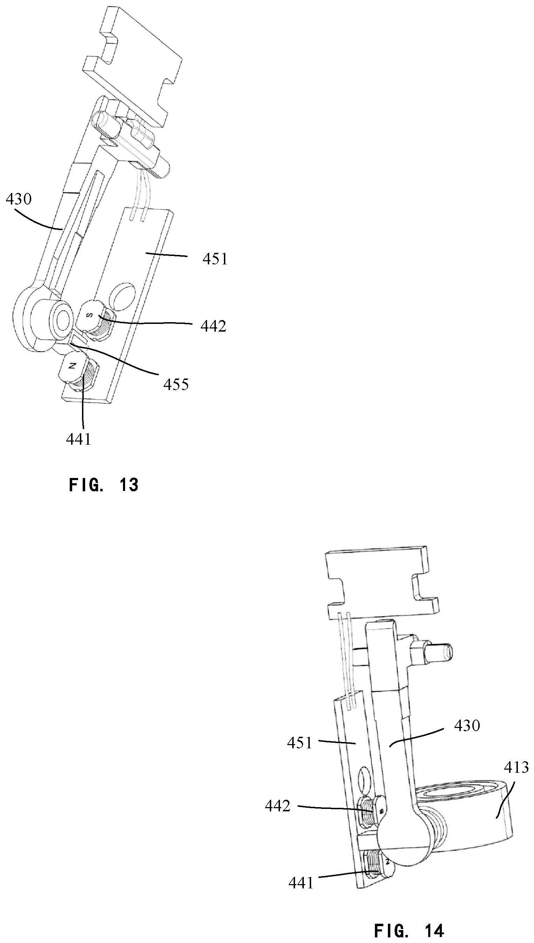

FIGS. 13 and 14 show schematic views of a force detection device according to a fifth embodiment of the present disclosure. Unlike the fourth embodiment, the first and second inductance units 441, 442 are soldered on the inductor circuit board 451 located on a side of the lever 430. The side inductor circuit board 451 is arranged substantially perpendicular to the pivot axis W5 passing through the first bearing 413 and is substantially parallel to the rotation axis W3 of the driving shaft, and the inductor circuit board 451 may be connected to a main control circuit board in the electric toothbrush via electrical wires. The distal magnetic poles of the two inductance units 441, 442 have opposite polarities, and a magnetic isolator 455 is mounted on the long arm of the lever 430. When the magnetic isolator 455 is inserted into a space between the first and second inductance unit 441, 442 as the lever 430 moves, the external magnetic flux linkage between the two inductance units 441, 442 will be blocked, such that the mutual inductance between multiple inductance units can be varied to provide feedback of the magnitude of the external force. The magnetic isolator 455 herein refers to a material having a relative permeability of less than 1. For example, preferably, the magnetic isolator 455 may be of copper metal.

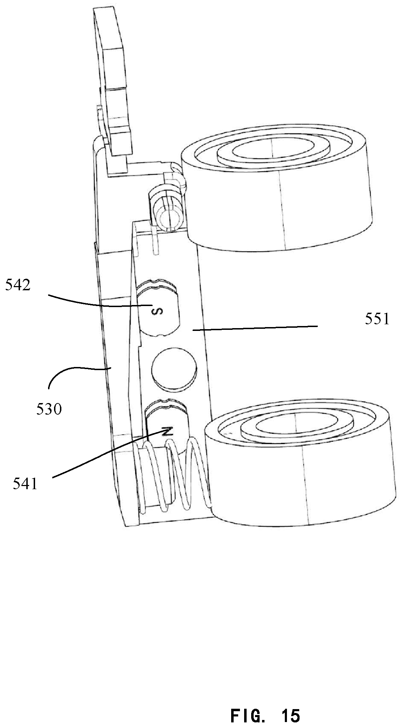

FIG. 15 shows a schematic view of a force detection device according to a sixth embodiment of the present disclosure. First and second inductance units 541 and 542 are disposed on the side of the lever 530 by using a separate inductor PCB 551, and a magnetic conductor similar to that of the first embodiment is used to affect the mutual inductance between the two inductance units 541 and 542.

In the above embodiment with the mutual inductance coupling member, the first inductance unit and the second inductance unit are used for illustration. In practice, more than two inductance units may be provided, and the mutual inductance between multiple inductance units will likewise be changed by the mutual inductance coupling member moving within the external magnetic flux linkage between the multiple inductance units. This will not be described in detail herein.

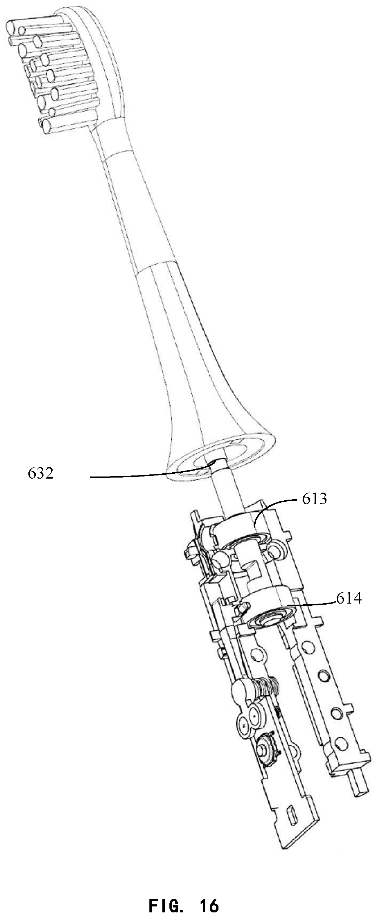

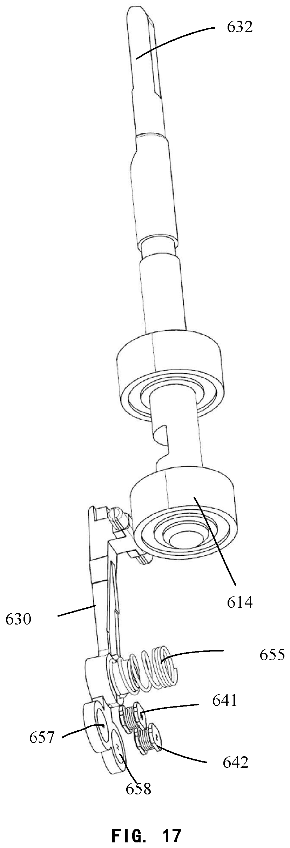

FIGS. 16 and 17 show schematic views of the force detection device according to the sixth embodiment of the present disclosure. Unlike the fourth and fifth embodiments in which the lever 530 extends from the second bearing toward the front side of the electric toothbrush, in the sixth embodiment, the long arm of the lever 630 extends from the second bearing 614 toward the rear side of the electric toothbrush, i.e., away from the driving shaft 632, while the short arm of the lever 630 remains in contact with the second bearing 614, and the lever 630 may be fixed to the transducer housing or the handle housing. A first magnet 657 and a second magnet 658 opposite the first and second inductance units 641 and 642 on the back of the fixed circuit board are mounted at the distal end of the long arm of the lever 630. The long arm is further provided with a helical spring 655 for restoring the rotating assembly. These magnets may also be replaced by energized coils. Similar to the role of the magnets in relation to the inductance units in the first embodiment, the magnetic poles of the magnets are directed toward the internal magnetic field lines of the inductance units, and at least when the magnets 657 and 658 are closest to the positions of the detection inductance units 641 and 642, the magnetic fluxes generated by the magnets 657 and 658 and passing through the magnetic cores of inductance units 641 and 642 cause the fixed magnetic cores of the inductance units to enter the magnetic saturation state. In this embodiment, the magnets may also be replaced by energized coils.

In the above embodiments, the rotating assembly has a first bearing and a second bearing, where the first bearing close to the driving shaft provides a pivot axis, which is exemplary. In other alternative embodiments, the pivot assembly of the rotating assembly may pass through the second bearing remote from the driving shaft. That is, the second bearing is fixedly mounted relative to the handle housing, and the first bearing is movably mounted relative to the handle housing. In addition, in some other alternative embodiments, there may be only one bearing.

The above description of the personal care appliance with a force detection device is made with an electric toothbrush as an example, but it is to be understood that the force detection device described above may be applicable to other personal care appliances that require force control, such as facial cleaning and massage. The brush head can also be modified to other similar treatment heads, such as massage heads.

Although the disclosure is disclosed above with preferred embodiments, they are not intended to limit the disclosure. Any person skilled in the art can make possible variations and modifications without departing from the spirit and scope of the disclosure. Therefore, any modifications, equivalent changes, and modifications made to the above embodiments based on the technical essence of the disclosure, without departing from the content of the technical solution of the disclosure, shall fall within the protection scope defined by the claims of the disclosure.

**Claims**

1. A personal care appliance, comprising:

   a handle housing;
   a rotating assembly, comprising a force-receiving element extending outwardly relative to the handle housing, the rotating assembly being rotatable relative to the handle housing when an external force is applied to the force-receiving element; and
   a force detection device configured to detect a force on the force-receiving element,
   wherein the force detection device comprises an inductance unit and a magnet,
   wherein the inductance unit comprises a fixed magnetic core and an electrical conductor surrounding the fixed magnetic core, and the magnet is arranged relative to the fixed magnetic core of the inductance unit to generate a magnetic flux passing through the fixed magnetic core of the inductance unit;
   the magnet is displaced relative to the inductance unit as the rotating assembly rotates, and the inductance unit is capable of outputting a signal indicative of an angle of rotation of the rotating assembly and further indicative of a magnitude of the external force applied to the force-receiving element.

2. The personal care appliance according to claim 1, wherein the fixed magnetic core of the inductance unit is in an unsaturated state when the magnet is furthest away from the inductance unit, the magnetic flux generated by the magnet and passing through the fixed magnetic core causes the fixed magnetic core of the inductance unit to enter a magnetic saturation state when the magnet rotates with the rotating assembly to approach the inductance unit.

3. The personal care appliance according to claim 1, wherein

   the fixed magnetic core of the inductance unit has entered a magnetic saturation state when the magnet is furthest from the fixed magnetic core of the inductance unit,
   a change in the magnetic flux generated by the magnet and passing through the magnetic core intensifies the magnetic saturation state of the fixed magnetic core of the inductance unit during a process where the magnet rotates with the rotating assembly to approach the fixed magnetic core of the inductance unit;
   a change in the magnetic flux generated by the magnet and passing through the magnetic core alleviates the magnetic saturation state of the fixed magnetic core of the inductance unit during a process where the magnet rotates with the rotating assembly to move away from the fixed magnetic core of the inductance unit.

4. The personal care appliance according to claim 1, wherein the fixed magnetic core of the inductance unit is approximately at a moderate saturation critical point when the magnet is furthest from the fixed magnetic core of the inductance unit,

   the magnet causes the fixed magnetic core of the inductance unit to be approximately at a deep saturation critical point when the magnet is closest to the fixed magnetic core of the inductance unit;

a change in the magnetic flux generated by the magnet and passing through the magnetic core intensifies the magnetic saturation state of the fixed magnetic core of the inductance unit during a process where the magnet rotates with the rotating assembly to approach the fixed magnetic core of the inductance unit;

a change in the magnetic flux generated by the magnet and passing through the magnetic core alleviates the magnetic saturation state of the fixed magnetic core of the inductance unit during a process where the magnet rotates with the rotating assembly to move away from the fixed magnetic core of the inductance unit.

5. The personal care appliance according to any one of claims 1 to 4, wherein the inductance unit is fixed on a control circuit board arranged stationary relative to the handle housing, and the magnet is disposed on the rotating assembly;

the personal care appliance further comprises an elastic element for restoring the rotating assembly relative to the handle housing.

6. The personal care appliance according to claim 5, wherein the rotating assembly further comprises a direct-current motor, and the force-receiving element is a driving shaft driven by the direct-current motor or a brush head;

the magnet is disposed on a support component mounted to an end of the motor away from the driving shaft, and the elastic element is disposed on the support component.

7. The personal care appliance according to any one of claims 2 to 4, wherein the magnet comprises a first magnet and a second magnet, and the inductance unit comprises a first inductance unit and a second inductance unit, the first magnet moving relative to a fixed magnetic core of the first inductance unit, and the second magnet moving relative to a fixed magnetic core of the second inductance unit.

8. The personal care appliance according to claim 5, wherein the personal care appliance comprises a resonant assembly and a coil assembly fixedly mounted relative to the handle housing, the resonant assembly comprising a permanent magnet, a permanent magnet bracket for mounting the permanent magnet, and a driving shaft serving as or connected to the force-receiving element,

and the personal care appliance further comprises a first bearing and a second bearing, wherein the first bearing is closer to the driving shaft relative to the second bearing, and the first bearing and the second bearing are arranged to allow reciprocal rotation of the resonant assembly relative to the handle housing about an axis of the driving shaft when magnetic field lines of the permanent magnet cut through current carried by the coil assembly;

the rotating assembly comprises the first bearing and the second bearing, the rotating assembly rotates about a pivot axis when the external force is applied to the force-receiving element, the pivot axis passing through one of the first bearing and the second bearing and being perpendicular to an axis of the driving shaft, and the other of the first bearing and the second bearing is movably arranged relative to the handle housing.

9. The personal care appliance according to claim 8, further comprising a lever configured to amplify the amount of displacement of the force detection device, the lever comprising a short arm and a long arm, wherein the long arm is in contact with the one of the first bearing and the second bearing, with the elastic element for restoring the rotating assembly relative to the handle housing being disposed therebetween, and the short arm is in contact with the other of the first bearing and the second bearing that is movably arranged;

a lever rotation axis of the lever is substantially parallel to the pivot axis of the rotating assembly.

10. The personal care appliance according to claim 8, wherein the pivot axis passes through the first bearing, and the second bearing is movably disposed relative to the handle housing,

the personal care appliance further comprises a lever configured to amplify the amount of displacement of the force detection device, the lever comprising a short arm and a long arm, wherein the short arm is in contact with the second bearing, and the long arm extends toward a side away from the driving shaft;

a distal end of the long arm is provided with the magnet of the force detection device, and the inductance unit is disposed on a circuit board which is stationary relative to the handle housing;

and the magnet is opposite the inductance unit with the circuit board interposed therebetween.

11. The personal care appliance according to claim 1, wherein the magnet comprises a permanent magnet and an electromagnet.

12. A personal care appliance, comprising:

a handle housing;
a rotating assembly, comprising a force-receiving element extending outwardly relative to the handle housing, the rotating assembly being rotatable relative to the handle housing when an external force is applied to the force-receiving element; and

a force detection device configured to detect a force on the force-receiving element,

wherein the force detection device comprises a first inductance unit, a second inductance unit and a mutual inductance coupling member,

wherein the first inductance unit and the second inductance unit each comprise a fixed magnetic core and an electrical conductor surrounding the fixed magnetic core,

the mutual inductance coupling member moves relative to the first inductance unit and the second inductance unit within an external magnetic flux linkage between the first inductance unit and the second inductance unit to cause a change in a mutual inductance between the first inductance unit and the second inductance unit.

13. The personal care appliance according to claim 12, wherein the first inductance unit and the second inductance unit are disposed on a control circuit board which is arranged stationary relative to the handle housing;

the mutual inductance coupling member is disposed on the rotating assembly;

the personal care appliance further comprises an elastic element for restoring the rotating assembly relative to the handle housing.

14. The personal care appliance according to claim 12 or 13, wherein

the mutual inductance coupling member comprises a magnetic conductor formed of a material having a relative permeability of at least 10,

the magnetic conductor is arranged opposite the magnetic cores of the first inductance unit and the second inductance unit, respectively; and

the magnetic conductor is arranged to be displaced relative to the first inductance unit and the second inductance unit within the external magnetic flux linkage between the inductance units as the rotating assembly rotates.

15. The personal care appliance according to claim 14, wherein the magnetic conductor is U-shaped and comprises two arms and a bridge between the arms, the two arms respectively facing the first inductance unit and the second inductance unit.

16. The personal care appliance according to claim 12 or 13, wherein the mutual inductance coupling member comprises a magnetic isolator made of a material having a relative permeability of less than 1, and distal magnetic poles of the first inductance unit and the second inductance unit have opposite polarities; the magnetic isolator is configured to move between the first inductance unit and the second inductance unit, and is movable to a position where the external magnetic flux linkage between the first inductance unit and the second inductance unit is blocked.

17. The personal care appliance according to claim 13, wherein

the rotating assembly further comprises a direct-current motor, and the force-receiving element is a driving shaft driven by the direct-current motor or a brush head; and

the mutual inductance coupling member is disposed on a support component mounted to an end of the motor away from the driving shaft, and the elastic element is disposed on the support component.

18. The personal care appliance according to claim 12, wherein the personal care appliance further comprises a resonant assembly and a coil assembly fixedly mounted relative to the handle housing, the resonant assembly comprising a permanent magnet, a permanent magnet bracket for mounting the permanent magnet, and a driving shaft serving as or connected to the force-receiving element,

and the personal care appliance further comprises a first bearing and a second bearing, wherein the first bearing is closer to the driving shaft relative to the second bearing, and the first bearing and the second bearing are arranged to allow reciprocal rotation of the resonant assembly relative to the handle housing about an axis of the driving shaft when magnetic field lines of the permanent magnet cut through current carried by the coil assembly;

wherein the rotating assembly comprises the first bearing, the second bearing and the driving shaft, the rotating assembly is rotatable about a pivot axis when the external force is applied to the force-receiving element, the pivot axis passing through one of the first bearing and the second bearing and being perpendicular to an axis of the driving shaft, and the other of the first bearing and the second bearing is movably arranged relative to the handle housing.

19. The personal care appliance according to claim 18, wherein the rotating assembly is provided with a lever configured to amplify the amount of displacement of the force detection device, the lever comprising a short arm and a long arm, wherein the short arm is in contact with the other of the first bearing and the second bearing that is movably arranged, the long arm extends toward the one of the first bearing and the second bearing, the mutual inductance coupling member is disposed on the long arm of the lever, and the first inductance unit and the second inductance unit are mounted on an inductor circuit board which is stationary relative to the handle housing,

> an elastic element for restoring the rotating assembly is provided between the long arm and the one of the first bearing and the second bearing,
> wherein a lever rotation axis of the lever is substantially parallel to the pivot axis of the rotating assembly.

20. The personal care appliance according to claim 18 or 19, wherein the inductor circuit board is arranged perpendicular to the pivot axis passing through the first bearing, and the first inductance unit and the second inductance unit are disposed at a distance from each other on the inductor circuit board, the mutual inductance coupling member comprises a magnetic conductor or a magnetic isolator.

21. The personal care appliance according to claim 18, wherein the rotating assembly is provided with a lever configured to amplify the amount of displacement of the force detection device, the lever comprising a short arm and a long arm, wherein the short arm is in contact with the other of the first bearing and the second bearing that is movably arranged, and the long arm extends away from the one of the first bearing and the second bearing.

22. The personal care appliance according to claim 19, wherein the first inductance unit and the second inductance unit are disposed on the inductor circuit board, and the long arm of the lever moves relative to a surface of the inductor circuit board; auxiliary magnetic conductors are respectively provided on the first inductance unit and the second inductance unit, such that magnetic field lines generated by the first inductance unit itself and magnetic field lines generated by the second inductance unit itself substantially face each other, and the magnetic field lines are substantially perpendicular to a direction of movement of the mutual inductance coupling member.

23. A personal care appliance, comprising:

> a handle housing;
> a rotating assembly, comprising a force-receiving element extending outwardly relative to the handle housing, the rotating assembly being rotatable relative to the handle housing when an external force is applied to the force-receiving element; and
a force detection device configured to detect an external force applied to the force-receiving element, the force detection device comprising a first element and a second element which move relative to each other, the first element being movably mounted relative to the handle housing, and the second element being fixedly mounted relative to the handle housing,
wherein the personal care appliance further comprises a lever assembly, the lever assembly comprising a pivot portion and a lever, the lever having a long arm and a short arm, the short arm of the lever being attached to an end of the rotating assembly opposite the force-receiving element, and the first element being mounted on the long arm.

24. The personal care appliance according to claim 23, further comprising:

> a handle housing; and
> a rotating assembly, comprising a force-receiving element extending outwardly relative to the handle housing, wherein the rotating assembly is rotatable relative to the handle housing when an external force is applied to the force-receiving element;
> the short arm is in contact with an end of the rotating assembly away from the force-receiving element; and
> the lever assembly further comprises an elastic element for restoring.

25. The personal care appliance according to claim 23, further comprising a resonant assembly and a coil assembly fixedly mounted relative to the handle housing, the resonant assembly comprising a permanent magnet, a permanent magnet bracket for mounting the permanent magnet, and a driving shaft serving as or connected to the force-receiving element,

> wherein the rotating assembly comprises at least one bearing and the driving shaft held by the bearing, the bearing being arranged to allow reciprocal rotation of the resonant assembly relative to the handle housing about an axis of the driving shaft when magnetic field lines of the permanent magnet cut through current carried by the coil assembly; and
> the rotating assembly rotates about a pivot axis when the external force is applied to the force-receiving element, the pivot axis passing through the at least one bearing and being perpendicular to a rotation axis of the driving shaft, and the pivot axis of the rotating assembly being parallel to a lever rotation axis of the lever.

26. The personal care appliance according to claim 25, further comprising a first bearing and a second bearing, wherein the first bearing is closer to the driving shaft relative to the second bearing;

 the pivot axis of the rotating assembly passes through one of the first bearing and the second bearing, and the other of the first bearing and the second bearing is movable relative to the handle housing;
 the short arm is in contact with the other bearing.

27. The personal care appliance according to claim 26, wherein the pivot axis passes through the first bearing, and the second bearing is movable relative to the handle housing;

 the short arm is in contact with the second bearing;
 the lever assembly further comprises an elastic element for restoring, the elastic element being disposed between the long arm and the first bearing.

FIG. 1

FIG. 2

FIG. 3

**FIG. 4**

**FIG. 5**

FIG. 6

FIG. 7

**FIG. 8**

311

321

FIG. 9

311

310

FIG. 10

FIG. 11

FIG. 12

430

451

442

455

441

FIG. 13

451

430

413

442

441

FIG. 14

542

S

551

530

N

541

FIG. 15

632

613

614

FIG. 16

**F I G. 17**

FIG. 18

FIG. 19

FIG. 20

## INTERNATIONAL SEARCH REPORT

| International application No. |
| --- |
| **PCT/CN2024/110928** |

| A. | CLASSIFICATION OF SUBJECT MATTER |
| --- | --- |

A61C 17/26(2006.01)i; A61C 17/22(2006.01)i; G01L 5/00(2006.01)i

According to International Patent Classification (IPC) or to both national classification and IPC

| B. | FIELDS SEARCHED |
| --- | --- |

Minimum documentation searched (classification system followed by classification symbols)

IPC: A61C G01L A46B

Documentation searched other than minimum documentation to the extent that such documents are included in the fields searched

Electronic data base consulted during the international search (name of data base and, where practicable, search terms used)

CNABS; CNTXT; CNKI; VEN; WPABS; ENTXT; USTXT; EPTXT; WOTXT: 电感, 磁通量, 自感, 角度, 力, 负载, 饱和, 互感, 磁铁, 线圈, induct+, coil, press+, stress, toothbrush, force

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107624045 A (BRAUN GMBH) 23 January 2018 (2018-01-23) description, paragraphs [0012]-[0048], and figures 1-5B | 12-17 |
| Y | CN 107624045 A (BRAUN GMBH) 23 January 2018 (2018-01-23) description, paragraphs [0012]-[0048], and figures 1-5B | 1, 5, 6, 8-11, 18-27 |
| Y | CN 111238693 A (KINPO ELECTRONICS, INC.) 05 June 2020 (2020-06-05) description, paragraphs [0054]-[0073], and figures 1-6 | 1, 5, 6, 8-11 |
| Y | CN 112006800 A (SHANGHAI SHIFT ELECTRICS CO., LTD.) 01 December 2020 (2020-12-01) description, paragraphs [0095]-[0110], and figures 1-16 | 8-10, 18-27 |
| A | CN 105212516 A (GUANGZHOU WUXIANG DIGITAL TECHNOLOGY CO., LTD.) 06 January 2016 (2016-01-06) entire document | 1-27 |
| A | CN 115603539 A (SHANGHAI SHIFT ELECTRICS CO., LTD.) 13 January 2023 (2023-01-13) entire document | 1-27 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 September 2024** | **17 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/110928** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 214207530 U (SHENZHEN BAIJIAYI ELECTRONICS CO., LTD.) 17 September 2021 (2021-09-17) <br> entire document | 1-27 |
| A | CN 217040391 U (SHANGHAI XINSHIDA ELECTRONIC TECHNOLOGY CO., LTD.) 26 July 2022 (2022-07-26) <br> entire document | 1-27 |

Form PCT/ISA/210 (second sheet) (July 2022)

**INTERNATIONAL SEARCH REPORT**
Information on patent family members

International application No.

**PCT/CN2024/110928**

| Patent document cited in search report | | | Publication date (day/month/year) | Patent family member(s) | Publication date (day/month/year) |
|---|---|---|---|---|---|
| CN | 107624045 | A | 23 January 2018 | None | |
| CN | 111238693 | A | 05 June 2020 | None | |
| CN | 112006800 | A | 01 December 2020 | None | |
| CN | 105212516 | A | 06 January 2016 | None | |
| CN | 115603539 | A | 13 January 2023 | None | |
| CN | 214207530 | U | 17 September 2021 | None | |
| CN | 217040391 | U | 26 July 2022 | None | |

Form PCT/ISA/210 (patent family annex) (July 2022)

## EP 4 775 175 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104617732 B